Europäisches Patentamt

**European Patent Office**

Office européen des brevets

(11) Publication number : **0 388 836 B1**

(19)

# EUROPEAN PATENT SPECIFICATION

(12)

(45) Date of publication of patent specification :
02.12.92 Bulletin 92/49

(51) Int. Cl.⁵ : **C02F 5/10, C02F 5/12**

(21) Application number : **90105114.4**

(22) Date of filing : **19.03.90**

(54) Composition for treating water or aqueous systems.

(30) Priority : **21.03.89 GB 8906413**

(43) Date of publication of application :
**26.09.90 Bulletin 90/39**

(45) Publication of the grant of the patent :
**02.12.92 Bulletin 92/49**

(84) Designated Contracting States :
**BE CH DE ES FR GB IT LI NL SE**

(56) References cited :
**EP-A- 0 184 558**
**GB-A- 2 181 735**
**US-A- 4 085 060**

(73) Proprietor : **CIBA-GEIGY AG**
**Klybeckstrasse 141**
**CH-4002 Basel (CH)**

(72) Inventor : **Patel, Suresh**
**37 Lawnswood Park Road**
**Swinton, Manchester M27 1NJ (GB)**

(74) Representative : **Zumstein, Fritz, Dr. et al**
**Bräuhausstrasse 4**
**W-8000 München 2 (DE)**

EP 0 388 836 B1

Jouve, 18, rue Saint-Denis, 75001 PARIS

## Description

The present invention relates to a method of treating water or an aqueous system in order to prevent or minimise the formation of calcium and magnesium salt deposits on the surfaces of pipes, boilers, evaporators, steam ejectors and the like.

Numerous additives have been proposed for addition to water or aqueous systems for these purposes including certain polyphosphates, polycarboxylic acids such as polyacrylic acid and polymethacrylic acid, hydrolysed polymaleic anhydride and hydrolysed copolymers of maleic anhydride with other ethylenically unsaturated monomers.

GB 1414918 describes a process for treating water to prevent the deposition of scale which comprises adding to the water a hydrolysed copolymer of maleic anhydride with one or more monoethylenically unsaturated monomers, the copolymer having a molar ratio of maleic anhydride to other monomers between 2.5:1 and 100:1. It is suggested in GB 1414918 that the copolymer may be used in combination with other water treatment compounds, a list of numerous known dispersing and/or threshold agents being given, including polymaleic acid and its salts. The only specific combination mentioned in GB 1414918 is that of the copolymer and a napthalenesulphonic acid-formaldehyde condensation product.

We have now surprisingly found that if hydrolysed polymaleic anhydride is used in admixture with a hydrolysed copolymer of maleic anhydride with one or more other ethylenically unsaturated monomers, a synergistic effect is obtained. The synergistic effect is particularly marked with respect to threshold properties where the homopolymer has a weight average molecular weight of 400 to 800. Maleic anhydride homopolymers conventionally used in commercial water treatment processes have had higher molecular weights.

Accordingly the present invention provides a composition for treating water or an aqueous system to prevent the deposition of scale caused by scale-forming impurities in the water which comprises hydrolysed polymaleic anhydride having a weight average molecular weight of 400 to 800 and a hydrolysed copolymer of maleic anhydride with at least one mono-ethylenically unsaturated monomer.

The hydrolysed copolymer may have a weight average molecular weight up to 5000. The hydrolysed copolymer preferably has a weight average molecular weight from 400 to 3000, especially 800 to 2500.

Suitable copolymers include copolymers of maleic anhydride with at least one monomer selected from a mono-ethyleneicaly unsaturated acid, or an ester, anhydride, amide or water-soluble salt thereof, a mono-ethylenically unsaturated hydrocarbon, nitrile, aldehyde or ketone or a vinyl carboxylate; and mixtures of two or more of said copolymers.

The ethylenically unsaturated monomers may be selected from a wide variety of compounds, for example acrylic acid, methacrylic acid, crotonic acid, itaconic acid, aconitic acid, itaconic anhydride, ethyl acrylate, methyl methacrylate, acrylonitrile, acrylamide, vinyl acetate, styrene, alpha-methyl styrene, vinyl sulphonic acid, 2-acrylamido-2-methylpropane sulphonic acid, methyl vinyl ketone, acrolein, ethylene, propylene or mixtures thereof.

Preferably the monomer copolymerised with maleic anhydride is at least one monomer selected from an unsaturated monocarboyxlic acid, such as acrylic acid or methacrylic acid; a $C_1$-$C_8$ alkyl ester of an unsaturated monocarboxylic acid, such as methyl acrylate, ethyl acrylate, isopropyl acrylate, n-butyl acrylate, 2-ethylhexyl acrylate and the corresponding methacrylates; an amide of an unsaturated monocarboxylic acid such as acrylamide or methacrylamide; an unsaturated sulphonic acid such as vinylsulphonic acid, allylsulphonic acid or a styrenesulphonic acid, or an alkali metal salt thereof; an unsaturated nitrile such as acrylonitrile or methacrylonitrile; a vinyl ester of a $C_1$-$C_8$ monocarboxylic acid such as vinyl acetate, vinyl propionate or vinyl butyrate;or a styrene such as styrene itself, alpha-methylstyrene or p-methylstyrene.

In a preferred embodiment of the invention, the copolymer is a copolymer of maleic anhydride with vinyl acetate, a copolymer of maleic anhydride with ethyl acrylate, a copolymer of maleic anhydride with vinyl acetate and ethyl acrylate, a copolymer of maleic anhydride with allylsulphonic acid or an alkali metal salt thereof, a copolymer of maleic anhydride with acrylonitrile or a mixture of two or more of such copolymers.

When mixtures of monomers are used, the resulting polymer may be, for example, a terpolymer derived from maleic anhydride and two other monomers. Such terpolymers are, for example, those derived from maleic anhydride with two ethylenically unsaturated monomers, selected from acrylic acid, methacrylic acid, crotonic acid, itaconic acid, aconitic acid, ethyl acrylate, methyl methacrylate and other esters of said acids, acrylonitrile, acrylamide, vinyl acetate, styrene, alpha-methylstyrene, methyl vinyl ketone, acrolein, ethylene and propylene, the molar ratio of said two ethylenically unsaturated monomers to each other being from 1:3 to 3:1.

Preferred hydrolysed terpolymers include a hydrolysed terpolymer of maleic anhydride with (a) vinyl acetate and another ethylenically unsaturated monomer selected from the group consisting of ethyl acrylate, acrylamide, methyl vinyl ketone, acrylonitrile and crotonic acid, wherein the molar ratio of vinyl acetate to the other monomer is 1:3 to 3:1; or with (b) a 1:1 molar ratio of methyl methacrylate and ethyl acrylate; or with (c) a 1:1 molar ratio of methyl acrylate and acrolein.

In an especially preferred embodiment of the invention the copolymer is a hydrolysed terpolymer of maleic anhydride with vinyl acetate and ethyl acrylate, the molar ratio of maleic anhydride to the combined moles of vinyl acetate and ethyl acrylate being from 2.5:1 to 5:1, the molar ratio of vinyl acetate to ethyl acrylate being 1:3 to 3:1, preferably 1:2 to 2:1.

The hydrolysed homopolymers and copolymers used in the compositions of the invention are known and may be produced as described in, for example, GB 1369429 and GB 1414918. Hydrolysis of the homopolymer and copolymer may be effected using water or dilute acid or alkali, so the hydrolysed polymaleic anhydride and the hydrolysed copolymer may each be present as an acid or an alkali metal salt thereof.

The weight ratio of hydrolysed polymaleic anhydride to the hydrolysed copolymer is not critical as a synergistic effect is generally obtained at most proportions. Good results are generally obtained with such weight ratio between 10:90 and 90:10 a weight ratio from 25:75 to 75:25 being preferred. Within those limits the optimum ratio may vary according to the nature of the copolymer and the amount of composition added to the water. For instance, ratios of 25:75, 50:50 and 75:25 can be used successfully.

The amount of composition used to treat the water may be from 0.1 to 100 ppm, preferably from 0.5 to 20 ppm.

The compositions of the invention are useful for inhibiting the deposition of scale forming compounds from water or aqueous systems.

When used to inhibit the deposition of scale and the precipitation of salts from aqueous solutions, the compositions of the invention, in the form of acids or salts thereof, are particularly effective in inhibiting deposition of scale-forming salts derived from calcium, magnesium, barium or strontium cations, and anions such as sulphate, carbonate, hydroxide, phosphate and silicate.

With respect to aqueous systems which may be treated according to the present invention, of particular interest are cooling water systems, steam generating systems, sea-water evaporators, reverse osmosis equipment, bottle washing plants, pulp and paper manufacturing equipment, sugar evaporator equipment, soil irrigation systems, hydrostatic cookers, gas scrubbing systems, closed circuit heating systems, aqueous-based refrigeration systems and oil production and drilling systems.

The compositions of the invention may be used alone, or in conjunction with other compounds known to be useful in the treatment of aqueous systems.

In the treatment of systems such as cooling water systems, air-conditioning systems, steam-generating systems, sea-water evaporator systems, hydrostatic cookers, and closed circuit heating or refrigerant systems, corrosion inhibitors may be used such as, for example, water soluble zinc salts; phosphates; polyphosphates; phosphonic acids and their salts, for example, hydroxyethyl diphosphonic acid (HEDP), nitrilotris methylene phosphonic acid and methylamino dimethylene phosphonocarboxylic acids and their salts, for example, those described in German Offenlegungsschrift 2632774, hydroxyphosphonoacetic acid, 2-phosphonobutane-1,2,4-tri-carboxylic acid and those disclosed in GB 1572406; nitrates, for example, sodium nitrate, nitrites, e.g. sodium nitrite; molybdates, e.g. sodium molybdate, tungstates; silicates, e.g. sodium silicate; benzotriazole, bis-benzotriazole or copper deactivating benzotriazole or tolutriazole derivatives or their Mannich base derivatives; mercaptobenzotriazole; N-acyl sarcosines; N-acylimino diacetic acids; ethanolamines; fatty amines; polyacrylic acid, and alkali metal salts thereof, copolymers of acrylic acid, e.g. copolymers of acrylic acid and hydroxyalkylated acrylic acid, and substituted derivatives of polyacrylic acids and their copolymers. Moreover, in such systems, the compositions used according to the invention may be used in conjunction with further dispersing and/or threshold agents, e.g. polymerised acrylic acid (or its salts), phoshino-polycarboxylic acids (as described and claimed in British Patent 1458235), the cotelomeric compounds described in European Patent Application No. 0150706, hydrolysed polyacrylonitrile, polymerised methacrylic acid and its salts, polyacrylamide and copolymers thereof from acrylic and methacrylic acids, lignin sulphonic acid and its salts, tannin, naphthalene sulphonic acid/formaldehyde condensation products, starch and its derivatives, cellulose, acrylic acid/lower alkyl hydroxy- acrylate copolymers, e.g. those described in US Patent Specification No. 4029577, sulfonated styrene homopolymers, e.g. those described in US Patent Specification No. 4374733 and combinations thereof. Specific threshold agents, such as for example, 2-phoshonobutane-1,2,4-tri-carboxylic acid (PBSAM), hydroxyethyl diphosphonic acid (HEDP), alkyl phosphonic acids, hydroxyphosphonoacetic acid, 1-aminoalkyl-1,1-diphosphonic acids and their salts, and alkali metal polyphosphates, may also be used.

Particularly interesting additive packages are those comprising compositions of the invention with one or more of polyacrylic acid or copolymers thereof, or substituted copolymers, hydroxyphosphonoacetic acid, HEDP, PBSAM, triazoles such as tolutriazole, molybdates and nitrites.

Precipitating agents such as alkali metal orthophosphates, carbonates; oxygen scavengers such as alkali metal sulphites and hydrazines; sequestering agents such as nitrilotriacetic acid and its salts; antifoaming agents such as silicones, e.g. polydimethylsiloxanes, distearylsebacamide, distearyl adipamide and related

3

products derived from ethylene oxide and/or propylene oxide condensations, in addition to fatty alcohols, such as capryl alcohols and their ethylene oxide condensates; and biocides, e.g. amines, quaternary ammonium compounds, chlorophenols, sulphur-containing compounds such as sulphones, methylene bis thiocyanates and carbamates, isothiazolones, brominated propionamides, triazines, phosphonium compounds, chlorine and chlorine-release agents, bromine and bromine-releasing agents and organometaiIic compounds such as tributyl tin oxide, may be used together with compositions of the invention.

The invention is illustrated by the following Examples.

In the Examples the Homopolymer is a hydrolysed polymaleic anhydride, prepared in xylene as solvent, having a weight average molecular weight of 580; Copolymer I is a terpolymer from maleic anhydride, ethyl acrylate and vinyl acetate in a molar ratio of 6:1:1 prepared in xylene as solvent and having a weight average molecular weight of 850; Copolymer II is a hydrolysed copolymer of maleic anhydride and acrylonitrile; and Copolymer III is a hydrolysed 1:1 copolymer of maleic anhydride and allylsulphonic acid (as the sodium salt) having a molecular weight of 2200.

Example 1:

Compositions of the invention are made by mixing the Homopolymer and Copolymer I in ratios by weight of 25:75, 50:50 and 75:25. These compositions are tested using amounts of 0.5, 1.0, 1.5, 2.0, 2.5, 3.0, 4.0 and 5.0 ppm, as well as the same amounts of the Homopolymer and copolymer separately, in the following way.

The ability of the products in preventing the deposition of calcium carbonate under seeded growth conditions is measured by mixing together solutions containing the respective cations and anions to give a solution which precipitates under the conditions specified. The products are added to the cation solution before mixing. After a certain period of time the concentration of the cation left in solution is measured and the % inhibition of precipitation (I %) is calculated using the formula:-

$$I\% = \frac{C \text{ final} - C \text{ blank}}{C \text{ initial} - C \text{ blank}} \times 100$$

where

C final = cation concentration at end of test

C initial = cation concentration at start of test

C blank = cation concentration at end of test in absence of an inhibitor

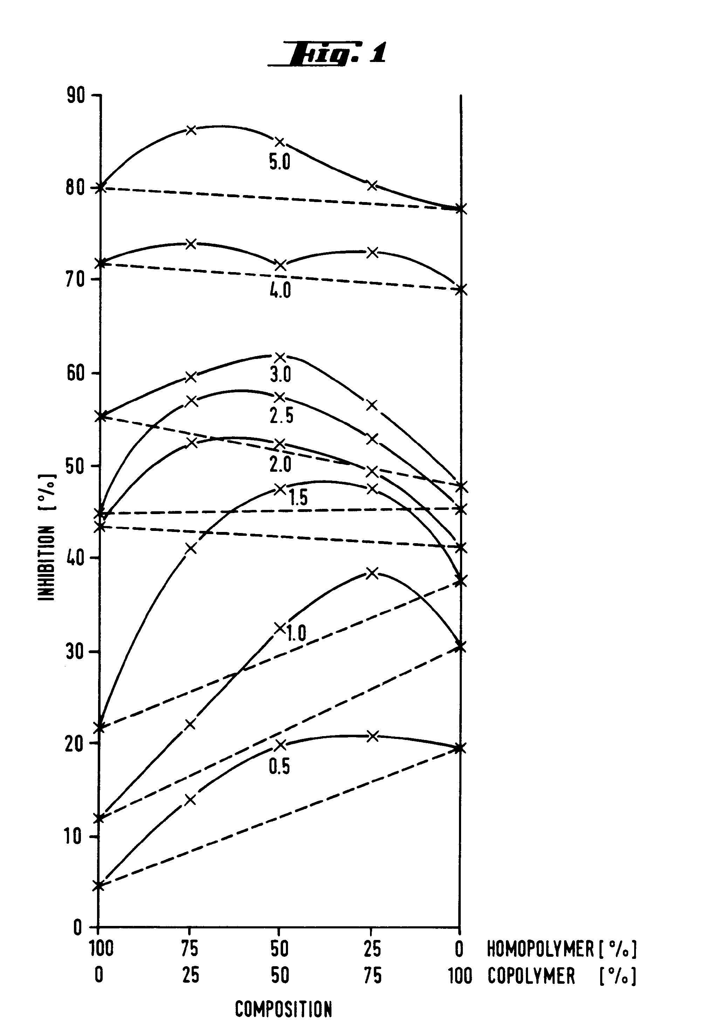

The test solution contains 125 ml/l $Ca^{2+}$, 375 mg/l $Mg^{2+}$, 182 mg/l $CO_3^{2-}$ and the inhibitor. Each test solution contains 0.02 g dry calcium carbonate seeds. The test solution is conducted for 30 minutes at 85°C and the level of $Ca^{2+}$ ions in solution measured. The results obtained are shown in Fig 1 of the accompanying drawings, where the dotted lines represent expected results if the effect of the two components is purely additive and the continuous lines show the results obtained, showing synergy as the % inhibition is greater than expected.

Example 2:

A tube blocking test is used to compare the scale control performance of the Homopolymer, Copolymer I and compositions of the invention containing both under aqueous conditions. The inhibitor under test is mixed with a synthetic seawater which is prepared from the following two solutions:-

Solution 1

40 g/litre NaCl
3.08 g/litre $CaCl_2 2H_2O$
22.2 g/litre $MgCl_2 6H_2O$
1.6 g/litre KCl
8.25 g/litre $Na_2SO_4$

Solution 2

3.06 g/litre NaCl
0.69 g/litre $NaCO_3$

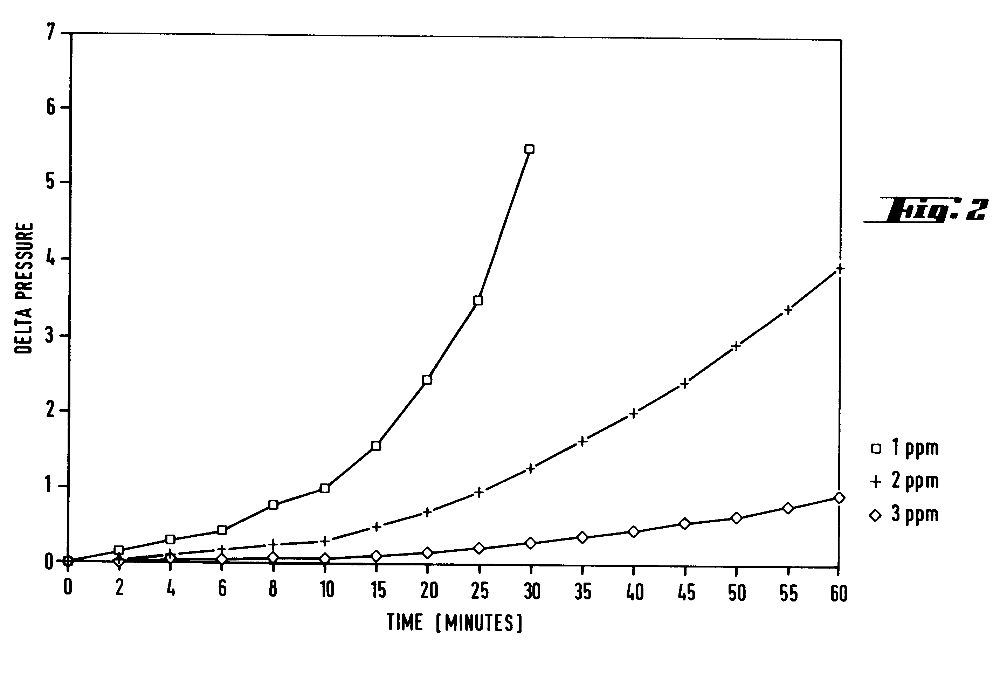

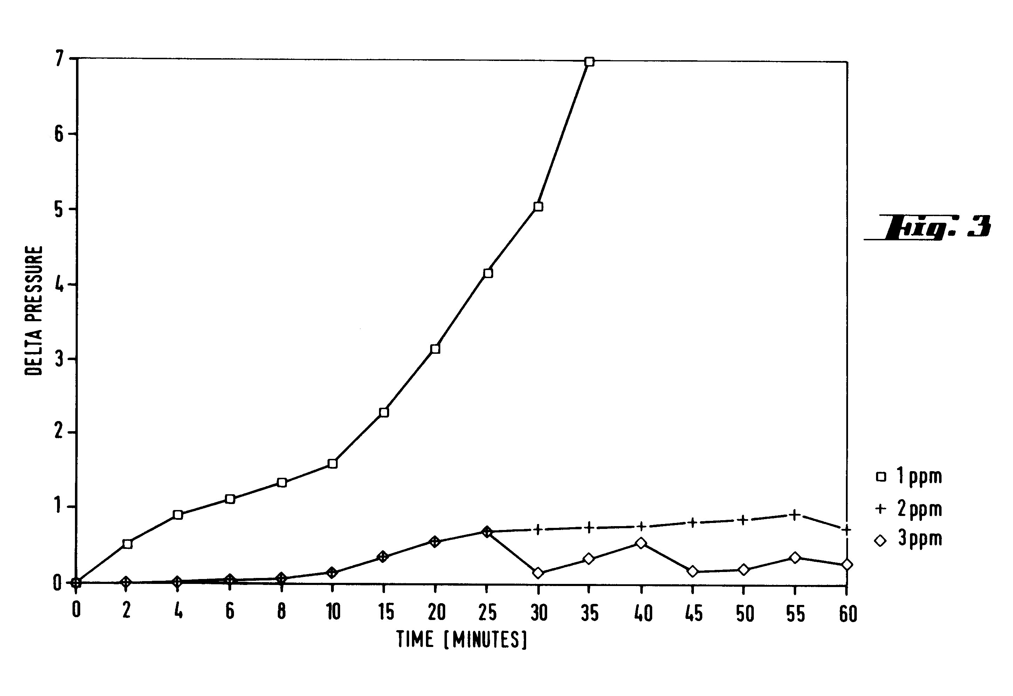

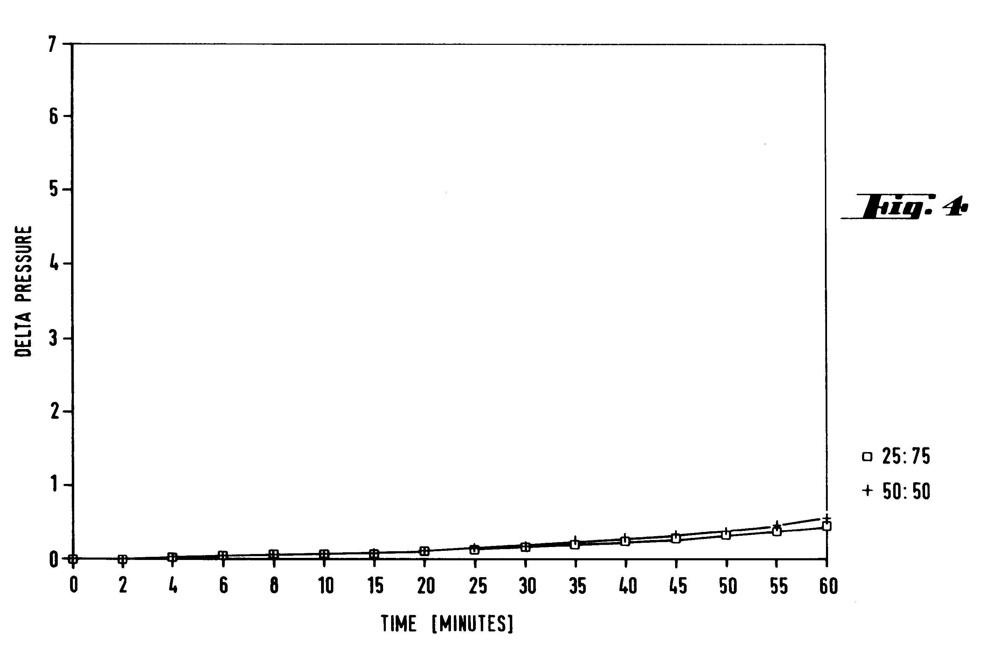

The resultant solution is pumped through a cupro-nickel coil, 1 meter in length and 1.1 mm internal diameter, which is immersed in a water bath at 90°C. The deposition of scale inside the tube results in an increase in the velocity of the fluid and an increase in pressure. The change in pressure across the tube is monitored using a ceramic pressure sensor inside a pressure measurement and control unit. The resulting change in pressure is shown in Figs 2, 3 and 4. Fig 2 shows the change (delta pressure) for the Homopolymer at 1, 2 and 3 ppm; and Fig 3 shows the change for Copolymer I at 1, 2 and 3 ppm; and Fig 4 shows the change for compositions of the invention at 2 ppm and ratios of homopolymer to copolymer of 25:75 and 50:50. The results for the compositions of the invention are better than those for the homopolymer or copolymer even when these are used at 3 ppm.

Example 3:

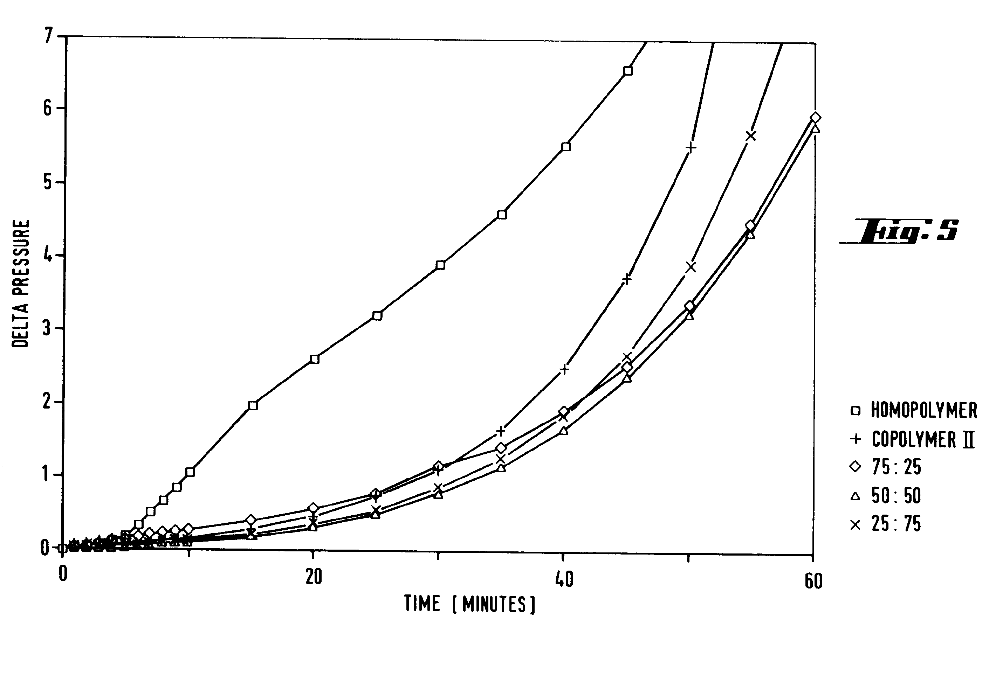

The test procedure of Example 2 is repeated to compare the scale control performance, at 1 ppm addition, of the Homopolymer, Copolymer II and compositions of the invention containing mixtures of the homopolymer and copolymer. The results are shown in Figure 5, where the curve with points marked with the square symbol shows the change (delta pressure) for the homopolymer, the curve with points marked + shows the change for the copolymer, the curve with points marked with diamonds shows the change for a homopolymer:copolymer weight ratio of 75:25, the curve marked with triangles shows the change for a weight ratio of 50:50 and the curve marked with x shows the change for a homopolymer:copolymer weight ratio of 25:75. The synergistic effect obtained with compositions of the invention is evident from these curves.

Example 4:

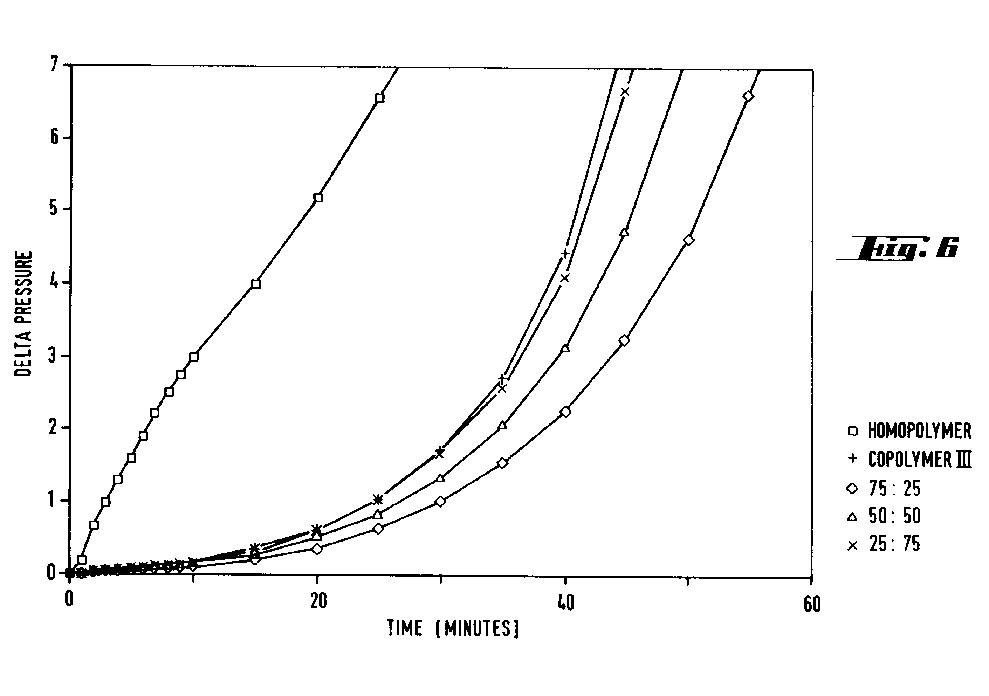

The test procedure of Example 2 is repeated to compare the scale control performance, at 1 ppm addition, of the Homopolymer, Copolymer III and compositions of the invention containing mixtures of the homopolymer and copolymer. The results are shown in Figure 6, where the curve with points marked with the square symbol shows the change (delta pressure) for the homopolymer, the curve with points marked + shows the change for the copolymer, the curve with points marked with diamonds shows the change for a homopolymer:copolymer weight ratio of 75:25, the curve marked with triangles shows the change for a weight ratio of 50:50 and the curve marked with x shows the change for a homopolymer:copolymer weight ratio of 25:75. The synergistic effect obtained with compositions of the invention is evident from these curves.

**Claims**

**Claims for the following Contracting States : BE, CH, DE, FR, GB, IT, LI, NL, SE**

1. A composition for treating water or an aqueous system to prevent the deposition of scale caused by scale-forming impurities in the water which comprises hydrolysed polymaleic anhydride having a weight average molecular weight of 400 to 800 and a hydrolysed copolymer of maleic anhydride with at least one mono-ethylenically unsaturated monomer.

2. A composition according to claim 1, in which the hydrolysed copolymer has a weight average molecular weight of 400 to 3000.

3. A composition according to claim 1, in which the hydrolysed copolymer has a weight average molecular weight of from 800 to 2500.

4. A composition according to claim 1, in which the copolymer is a copolymer of maleic anhydride with at least one monomer selected from a mono-ethylenically unsaturated acid, or an ester, anhydride, amide or water-soluble salt thereof, a mono-ethylenically unsaturated hydrocarbon, nitrile, aldehyde or ketone, a vinyl carboxylate or a mixture of two or more of said copolymers.

5. A composition according to claim 1, in which the ethylenically unsaturated monomer is selected from acrylic acid, methacrylic acid, crotonic acid, itaconic acid, aconitic acid, itaconic anhydride, ethyl acrylate, methyl methacrylate, acrylonitrile, acrylamide, vinyl acetate, styrene, alpha-methyl styrene, vinyl sulfonic acid, 2-acrylamido-2-methylpropane sulfonic acid, methyl vinyl ketone, acrolein, ethylene, propylene or mixtures thereof.

6. A composition according to claim 4, in which said monomer is at least one selected from an unsaturated monocarboxylic acid, a $C_1$-$C_8$ alkyl ester of an unsaturated monocarboxylic acid, an amide of an unsaturated monocarboxylic acid, an unsaturated sulfonic acid or an alkali metal salt thereof, an unsaturated nitrile, a vinyl ester of a $C_1$-$C_8$ mono-carboxylic acid or a styrene.

7. A composition according to claim 6, in which the copolymer is a copolymer of maleic anhydride with vinyl acetate, a copolymer of maleic anhydride with ethyl acrylate, a copolymer of maleic anhydride with vinyl acetate and ethyl acrylate, a copolymer of maleic anhydride with allylsulfonic acid or an alkali metal salt thereof, a copolymer of maleic anhydride with acrylonitrile or a mixture of two or more of said copolymers.

8. A composition according to claim 1, in which the copolymer is a terpolymer derived from maleic anhydride with two ethylenically unsaturated monomers selected from acrylic acid, methacrylic acid, crotonic acid, itaconic acid, aconitic acid, esters of said acids, acrylonitrile, acrylamide, vinyl acetate, styrene, alpha-methylstyrene, methyl vinyl ketone, acrolein, ethylene and propylene, the molar ratio of said two ethylenically unsaturated monomers to each other being from 1:3 to 3:1.

9. A composition according to claim 8, in which the terpolymer is derived from maleic anhydride either with (a) vinyl acetate and another ethylenically unsaturated monomer selected from the group consisting of ethyl acrylate, acrylamide, methyl vinyl ketone, acrylonitrile and crotonic acid, wherein the molar ratio of vinyl acetate to the other monomer is 1:3 to 3:1; or with (b) a 1:1 molar ratio of methyl methacrylate and ethyl acrylate; or with (c) a 1:1 molar ratio of methyl acrylate and acrolein.

10. A composition according to claim 9, in which the copolymer is a terpolymer of maleic anhydride with vinyl acetate and ethyl acrylate, the molar ratio of maleic anhydride to the combined moles of vinyl acetate and ethyl acrylate being from 2.5:1 to 5:1, the molar ratio of vinyl acetate to ethyl acrylate being 1:3 to 3:1.

11. A composition according to claim 1, in which the hydrolysed polymaleic anhydride and hydrolysed copolymer are in a ratio by weight of from 25:75 to 75:25.

12. A process of treating water or an aqueous system which comprises adding thereto 0.1 to 100 ppm of a composition according to any of claims 1-11.

13. A process according to claim 12, in which the amount of said composition added is from 0.5 to 20 ppm.

**Claims for the following Contracting State : ES**

1. A process for treating water or an aqueous system to prevent the deposition of scale caused by scale-forming impurities in the water which comprises adding to the water or aqueous system 0.1 to 100 ppm of a composition comprising hydrolysed polymaleic anhydride having a weight average molecular weight of 400 to 800 and a hydrolysed copolymer of maleic anhydride with at least one mono-ethylenically unsaturated monomer.

2. A process according to claim 1, in which the hydrolysed copolymer has a weight average molecular weight of from 800 to 2500.

3. A process according to claim 1, in which the copolymer is a copolymer of maleic anhydride with at least one monomer selected from a mono-ethylenically unsaturated acid, or an ester, anhydride, amide or water-soluble salt thereof, a mono-ethylenically unsaturated hydrocarbon, nitrile, aldehyde or ketone, a vinyl carboxylate or a mixture of two or more of said copolymers.

4. A process according to claim 1, in which the ethylenically unsaturated monomer is selected from acrylic acid, methacrylic acid, crotonic acid, itaconic acid, aconitic acid, itaconic anhydride, ethyl acrylate, methyl methacrylate, acrylonitrile, acrylamide, vinyl acetate, styrene, alpha-methyl styrene, vinyl sulfonic acid, 2-acrylamido-2-methylpropane sulfonic acid, methyl vinyl ketone, acrolein, ethylene, propylene or mixtures thereof.

5. A process according to claim 3, in which said monomer is at least one selected from an unsaturated monocarboxylic acid, a $C_1$-$C_8$ alkyl ester of an unsaturated monocarboxylic acid, an amide of an unsaturated monocarboxylic acid, an unsaturated sulfonic acid or an alkali metal salt thereof, an unsaturated nitrile, a vinyl ester of a $C_1$-$C_8$ mono carboxylic acid or a styrene.

6. A process according to claim 5, in which the copolymer is a copolymer of maleic anhydride with vinyl acetate, a copolymer of maleic anhydride with ethyl acrylate, a copolymer of maleic anhydride with vinyl acetate and ethyl acrylate, a copolymer of maleic anhydride with allysulfonic acid or an alkali metal salt thereof, a copolymer of maleic anhydride with acrylonitrile or a mixture of two or more of said copolymers.

7. A process according to claim 1, in which the copolymer is a terpolymer derived from maleic anhydride with two ethylenically unsaturated monomers selected from acrylic acid, methacrylic acid, crotonic acid, itaconic acid, aconitic acid, esters of said acids, acrylonitrile, acrylamide, vinyl acetate, styrene, alpha-methylstyrene, methyl vinyl ketone, acrolein, ethylene and propylene, the molar ratio of said two ethylenically unsaturated monomers to each other being from 1:3 to 3:1.

8. A process according to claim 7, in which the terpolymer is derived from maleic anhydride either with (a) vinyl :acetate and another ethylenically unsaturated monomer selected from the group consisting of ethyl acrylate, acrylamide, methyl vinyl ketone, acrylonitrile and crotonic acid, wherein the molar ratio of vinyl acetate to the other monomer is 1:3 to 3:1; or with (b) a 1:1 molar ratio of methyl methacrylate and ethyl acrylate; or with (c) a 1:1 molar ratio of methyl acrylate and acrolein.

9. A process according to claim 8, in which the copolymer is a terpolymer of maleic anhydride with vinyl acetate and ethyl acrylate, the molar ratio of maleic anhydride to the combined moles of vinyl acetate and ethyl acrylate being from 2.5:1 to 5:1, the molar ratio of vinyl acetate to ethyl acrylate being 1:3 to 3:1.

10. A process according to any of the preceding claims, in which the hydrolysed polymaleic anhydride and hydrolysed copolymer are in a ratio by weight of from 25:75 to 75:25.

11. A process according to any of the preceding claims, in which the amount of said composition added is from 0.5 to 20 ppm.

**Patentansprüche**

**Patentansprüche für folgende Vertragsstaaten : BE, CH, DE, FR, GB, IT, LI, NL, SE**

1. Zusammensetzung zur Behandlung von Wasser oder wäßrigen Systemen, welche die Ablagerung von Kesselstein aufgrund von kesselsteinbildenden Verunreinigungen im Wasser verhindert, dadurch gekennzeichnet, daß sie hydrolysiertes Polymaleinsäureanhydrid mit einem gewichtsmittleren Molekulargewicht von 400 bis 800 und ein hydrolysiertes Copolymer von Maleinsäureanhydrid mit mindestens einem monoethylenisch ungesättigtem Monomer enthält.

2. Zusammensetzung gemäß Anspruch 1, in welcher das hydrolysierte Copolymer ein gewichtsmittleres Molekulargewicht von 400 bis 3000 besitzt.

3. Zusammensetzung gemäß Anspruch 1, in welcher das hydrolysierte Copolymer ein gewichtsmittleres Molekulargewicht von 800 bis 2500 besitzt.

4. Zusammensetzung gemäß Anspruch 1, in welcher das Copolymere ein Copolymer von Maleinsäureanhydrid mit mindestens einem Monomer, ausgewählt aus einer monoethylenisch ungesättigten Säure, oder einem Ester, Anhydrid, Amid oder wasserlöslichem Salz davon, einem monoethylenisch ungesättigtem Kohlenwasserstoff, Nitril, Aldehyd oder Keton, einem Vinylcarboxylat oder eine Mischung von zwei oder mehreren der genannten Copolymeren ist.

5. Zusammensetzung gemäß Anspruch 1, in welcher das ethylenisch ungesättigte Monomer ausgewählt ist aus Acrylsäure, Methacrylsäure, Crotonsäure, Itaconsäure, Aconitsäure, Itaconsäureanhydrid, Ethylacrylat, Methylmethacrylat, Acrylnitril, Acrylamid, Vinylacetat, Styrol, Alpha-Methylstyrol, Vinylsulfonsäure, 2-Acrylamido-2-methylpropansulfonsäure, Methylvinylketon, Acrolein, Ethylen, Propylen oder Mischungen davon.

6. Zusammensetzung gemäß Anspruch 4, in welcher mindestens ein Monomer ausgewählt ist aus einer ungesättigten Monocarbonsäure, einem $C_1$-$C_8$ Alkylester einer ungesättigten Monocarbonsäure, einem Amid einer ungesättigten Monocarbonsäure, einer ungesättigten Sulfonsäure oder ihrem Alkalimetallsalz, einem ungesättigtem Nitril, einem Vinylester einer $C_1$-$C_8$ Monocarbonsäure oder einem Styrol.

7. Zusammensetzung gemäß Anspruch 6, in welcher das Copolymere ein Copolymer von Maleinsäureanhydrid mit Vinylacetat, ein Copolymer von Maleinsäureanhydrid mit Ethylacrylat, ein Copolymer von Maleinsäureanhydrid mit Vinylacetat und Ethylacrylat, ein Copolymer von Maleinsäureanhydrid mit Allylsulfonsäure oder ihrem Alkalimetallsalz, ein Copolymer von Maleinsäureanhydrid mit Acrylnitril oder eine Mischung aus zwei oder mehr der genannten Copolymere ist.

8. Zusammensetzung gemäß Anspruch 1, in der das Copolymere ein Terpolymer ist, abgeleitet von Maleinsäureanhydrid mit zwei ethylenisch ungesättigten Monomeren, die ausgewählt sind aus Acrylsäure, Methacrylsäure, Crotonsäure, Itaconsäure, Aconitsäure, Estern der genannten Säuren, Acrylnitril, Acrylamid, Vinylacetat, Styrol, Alpha-Methylstyrol, Methylvinylketon, Acrolein, Ethylen und Propylen, wobei das Molverhältnis der besagten zwei ethylenisch ungesättigten Monomeren zueinander 1:3 bis 3:1 beträgt.

9. Zusammensetzung gemäß Anspruch 8, in welcher das Terpolymer sich ableitet von Maleinsäureanhydrid entweder mit (a) Vinylacetat und einem anderen ethylenisch ungesättigtem Monomer ausgewählt aus der Gruppe bestehend aus Ethylacrylat, Acrylamid, Methylvinylketon, Acrylnitril und Crotonsäure, wobei das Molverhältnis von Vinylacetat zu dem anderen Monomer 1:3 bis 3:1 ist; oder mit (b) Methylmethacrylat und Ethylacrylat im Molverhältnis von 1:1; oder mit (c) Methylacrylat und Acrolein im Molverhältnis von 1:1.

10. Zusammensetzung gemäß Anspruch 9, in welcher das Copolymere ein Terpolymer von Maleinsäureanhydrid mit Vinylacetat und Ethylacrylat ist, wobei das Molverhältnis von Maleinsäureanhydrid zu der kombinierten Molmenge von Vinylacetat und Ethylacrylat 2,5:1 bis 5:1 beträgt und das Molverhältnis von Vinylacetat zu Ethylacrylat 1:3 bis 3:1 beträgt.

11. Zusammensetzung gemäß Anspruch 1, in welcher das hydrolysierte Polymaleinsäureanhydrid und das hydrolysierte Copolymere in einem Gewichtsverhältnis von 25:75 bis 75:25 stehen.

12. Verfahren zur behandlung von Wasser oder einem wäßrigen System dadurch gekennzeichnet, daß man diesem 0,1 bis 100 ppm einer Zusammensetzung, gemäß den Ansprüchen 1-11, zugibt.

13. Verfahren gemäß Anspruch 12, bei dem die Menge der zugegebenen Zusammensetzung 0,5 bis 20 ppm beträgt.

**Patentansprüche für folgenden Vertragsstaat : ES**

1. Verfahren zur Behandlung von Wasser oder einem wäßrigen System, welches die Ablagerung von Kesselstein aufgrund von kesselsteinbildenden Verunreinigungen im Wasser verhindert, dadurch gekennzeichnet, daß dem Wasser oder wäßrigem System 0,1 bis 100 ppm einer Zusammensetzung zugegeben werden, die ein hydrolysiertes Polymaleinsäureanhydrid mit einem gewichtsmittleren Molekulargewicht von 400 bis 800 und ein hydrolysiertes Copolymer von Maleinsäureanhydrid mit mindestens einem ethylenisch ungesättigtem Monomer enthält.

2. Verfahren gemäß Anspruch 1, in welchem das hydrolysierte Copolymere ein gewichtsmittleres Molekulargewicht von 800 bis 2500 besitzt.

3. Verfahren gemäß Anspruch 1, in welchem das Copolymere ein Copolymer von Polymaleinsäureanhydrid mit mindestens einem Monomer ausgewählt aus einer monoethylenisch ungesättigten Säure, oder einem Ester, Anhydrid, Amid oder wasserlöslichem Salz davon, einem monoethylenisch ungesättigtem Kohlenwasserstoff, Nitril, Aldehyd oder Keton, einem Vinylkarboxylat oder einer Mischung von zwei oder mehr der genannten Copolymere ist.

4. Verfahren gemäß Anspruch 1, in dem das ethylenisch ungesättigte Monomer ausgewählt ist aus Acrylsäure, Methacrylsäure, Crotonsäure, Itaconsäure, Aconitsäure, Itaconanhydrid, Ethylacrylat, Methylmethacrylat, Acrylnitril, Acrylamid, Vinylacetat, Styrol, Alpha-Methylstyrol, Vinylsulfonsäure, 2-Acrylamido2-methylpropansulfonsäure, Methylvinylketon, Acrolein, Ethylen, Propylen oder Mischungen davon.

5. Verfahren gemäß Anspruch 3, in welchem mindestens ein Monomer ausgewählt ist aus einer ungesättigten Monocarbonsäure, einem $C_1$-$C_8$ Alkylester einer ungesättigten Monocarbonsäure, einem Amid einer ungesättigten Monocarbonsäure, einer ungesättigten Sulfonsäure oder ihrem Alkalimetallsalz, einem un-

8

gesättigten Nitril, einem Vinylester einer $C_1$-$C_8$ Monocarbonsäure oder einem Styrol.

6. Verfahren gemäß Anspruch 5, wobei das Copolymere ein Copolymer von Maleinsäureanhydrid mit Vinylacetat, ein Copolymer von Maleinsäureanhydrid mit Ethylacrylat, ein Copolymer von Maleinsäureanhydrid mit Vinylacetat und Ethylacrylat, ein Copolymer von Maleinsäureanhydrid mit Allylsulfonsäure oder ihrem Alkalimetallsalz, ein Copolymer von Maleinsäureanhydrid mit Acrylnitril oder eine Mischung aus zwei oder mehr der genannten Copolymeren ist.

7. Verfahren gemäß Anspruch 1, in dem das Copolymere ein Terpolymer, abgeleitet von Maleinsäurehydrid mit zwei ethylenisch ungesättigten Monomeren, ausgewählt aus Acrylsäure, Methacrylsäure, Krotonsäure, Itaconsäure, Aconitsäure, Estern der genannten Säuren, Acrylnitril, Acrylamid, Vinylacetat, Styrol, Alpha-Methylstyrol, Methylvinylketon, Acrolein, Ethylen und Propylen, wobei das Molverhältnis der besagten zwei ethylenisch ungesättigten Monomere zueinander 1:3 bis 3:1 beträgt.

8. Verfahren gemäß Anspruch 7, in welchem der Terpolymer sich ableitet von Maleinsäureanhydrid entweder mit (a) Vinylacetat oder einem anderen ethylenisch ungesättigtem Monomer, ausgewählt aus der Gruppe bestehend aus Ethylacrylat, Acrylamid, Methylvinylketon, Acrylnitril und Krotonsäure, wobei das Molverhältnis von Vinylacetat zu dem anderen Monomer 1:3 bis 3:1 ist, oder mit (b) Methylmethacrylat und Ethylacrylat im Molverhältnis von 1:1, oder mit (c) Methylacrylat und Acrolein im Molverhältnis 1:1.

9. Verfahren gemäß Anspruch 8, in welchem das Copolymere ein Terpolymer des Maleinsäureanhydrids mit Vinylacetat und Ethylacrylat ist, wobei das Molverhältnis von Maleinsäureanhydrid zu der kombinierten Molmenge von Vinylacetat und Ethylacrylat 2,5:1 bis 5:1 beträgt und das Molverhältnis von Vinylacetat zu Ethylacrylat 1:3 bis 3:1 beträgt.

10. Verfahren gemäß jedem der vorherigen Ansprüche, in welchem das hydrolysierte Polymaleinsäureanhydrid und das hydrolysierte Copolymer in einem Gewichtsverhältnis von 25:75 bis 75:25 stehen.

11. Ein Verfahren entsprechend jedem der vorherigen Ansprüche, bei dem die Menge der zugegebenen Zusammensetzung 0,5 bis 20 ppm beträgt.

## Revendications

### Revendications pour les Etats contractants suivants : BE, CH, DE, FR, GB, IT, LI, NL, SE

1. Une composition pour le traitement d'eaux et de milieux aqueux ou appareils à circulation d'eau en vue d'empêcher le dépôt de tartre entraîné par des impuretés de l'eau formant du tartre, composition qui comprend un produit d'hydrolyse d'anhydride polymaléique ayant une masse moléculaire moyenne en poids de 400 à 800, avec un copolymère hydrolysé d'anhydride maléique et d'un ou plusieurs monomères à mono-insaturation éthylénique.

2. Une composition selon la revendication 1 dont le copolymère hydrolysé a une masse moléculaire moyenne en poids de 400 à 3.000.

3. Une composition selon la revendication 1 dont le copolymère hydrolysé a une masse moléculaire moyenne en poids de 800 à 2.500.

4. Une composition selon la revendication 1 dont le copolymère est un copolymère d'anhydride maléique avec un ou plusieurs monomères pris parmi un acide à mono-insaturation éthylénique ou un ester, anhydride, amide ou sel hydrosoluble de cet acide, un hydrocarbure mono-éthylénique, un nitrile, un aldéhyde ou une cétone.ou un carboxylate de vinyle, ou encore un mélange de deux ou plus de ces copolymères.

5. Une composition selon la revendication 1 dans laquelle le monomère éthylénique est pris parmi les acides acrylique, méthacrylique, crotonique, itaconique, aconitique, l'anhydride itaconique, l'acrylate d'éthyle et le méthacrylate de méthyle, l'acrylonitrile, l'acrylamide, l'acétate de vinyle, le styrène et l'alpha-méthyle styrène, l'acide vinyl-sulfonique, l'acide 2-acrylamido-2-méthylpropane-sulfonique, la méthyl-vinyl-cétone, l'acroléine, l'éthylène et le propylène ou bien est une association de plusieurs de ces monomères.

**6.** Une composition selon la revendication 4 dans laquelle le monomère est un ou plusieurs des suivants : un acide monocarboxylique insaturé ou un ester alkylique en $C_1$-$C_8$ ou un amide de cet acide, un acide sulfonique insaturé ou un sel de métal alcalin de celui-ci, un nitrile insaturé, un ester vinylique d'un acide monocarboxylique en $C_1$-$C_8$ et un styrène.

**7.** Une composition selon la revendication 6 dont le copolymère est un copolymère d'anhydride maléique avec l'acétate de vinyle, l'acrylate d'éthyle, l'acétate de vinyle et !'acrylate d'éthyle, ou bien avec l'acide allylsulfonique ou un sel de métal alcalin de cet acide ou encore avec l'acrylonitrile, ou il s'agit de deux ou plus de ces copolymères.

**8.** Une composition selon la revendication 1 dont le copolymère est un polymère ternaire d'anhydride maléique et de deux monomères éthyléniques choisis parmi les acides acrylique, métacrylique, crotonique, itaconique, aconitique et des esters de ces acides, l'acrylonitrile, l'acrylamide, l'acétate de vinyle, le styrène et l'alpha-méthylstyrène, la méthyl-vinylcétone, l'acroléine, l'éthylène et le propylène, le rapport molaire entre ces deux monomères éthyléniques étant compris entre 1:3 et 3:1.

**9.** Une composition selon la revendication 8 dont le polymère ternaire est un polymère d'anhydride maléique avec (a) l'acétate de vinyle et un autre monomère éthylénique pris parmi l'acrylate d'éthyle, l'acrylamide, la méthyl-vinyl-cétone, l'acrylonitrile et l'acide crotonique, dans un rapport molaire de l'acétate de vinyle à l'autre monomère compris entre 1:3 et 3:1 ; ou bien avec (b) le méthacrylate de méthyle et l'acrylate d'éthyle dans le rapport molaire 1:1 ; ou encore avec (c) l'acrylate de méthyle et l'acroléine dans le rapport molaire 1:1.

**10.** Une composition selon la revendication 9 dont le copolymère est un polymère ternaire d'anhydride maléique avec l'acétate de vinyle et l'acrylate d'éthyle dans un rapport molaire de l'anhydride maléique à l'ensemble de l'acétate de vinyle et de l'acrylate d'éthyle compris entre 2,5 et 5, le rapport molaire de l'acétate de vinyle à l'acrylate d'éthyle étant compris entre 1:3 et 3:1.

**11.** Une composition selon la revendication 1 dans laquelle le rapport pondéral entre l'anhydride polymaléique hydrolysé et le copolymère hydrolysé est compris entre 25:75 et 75:25.

**12.** Un procédé de traitement d'eaux ou de systèmes aqueux consistant à ajouter de 0,1 à 100 ppm d'une composition selon l'une quelconque des revendications précédentes.

**13.** Un procédé selon la revendication 12 dans lequel on ajoute de 0,5 à 20 ppm de la composition.

**Revendications pour l'Etat contractant suivant : ES**

**1.** Un procédé de traitement d'eaux et de milieux aqueux ou appareils à circulation d'eau en vue d'empêcher le dépôt de tartre provoqué par des impuretés de l'eau formant du tartre, procédé selon lequel on rajoute de 0,1 à 100 ppm d'une composition comprenant de l'anhydride polymaléique hydrolysé ayant une masse moléculaire moyenne en poids de 400 à 800 et un copolymère hydrolysé d'anhydride maléique et d'un ou plusieurs monomères à mono-insaturation éthylénique.

**2.** Un procédé selon la revendication 1 dans lequel le copolymère hydrolysé a une masse moléculaire moyenne en poids de 800 à 2.500.

**3.** Un procédé selon la revendication 1 dans lequel le copolymère est un copolymère d'anhydride maléique avec un ou plusieurs monomères pris parmi un acide à mono-insaturation éthylénique ou un ester, anhydride, amide ou sel hydrosoluble de cet acide, un hydrocarbure'mono-éthylénique, un nitrile, un aldéhyde ou une cétone.ou un carboxylate de vinyle, ou encore un mélange de deux ou plus de ces copolymères.

**4.** Un procédé selon la revendication 1 dans lequel le monomère éthylénique est pris parmi les acides acrylique, méthacrylique, crotonique, itaconique, aconitique, l'anhydride itaconique, l'acrylate d'éthyle et le méthacrylate de méthyle, l'acrylonitrile, l'acrylamide, l'acétate de vinyle, le styrène et l'alpha-méthyle styrène, l'acide vinyl sulfonique, l'acide 2-acrylamido-2-méthylpropane-sulfonique, la méthyl-vinyl-cétone, l'acroléine, l'éthylène et le propylène ou bien est une association de plusieurs de ces monomères.

**5.** Un procédé selon la revendication 3 dans lequel le monomère est un ou plusieurs des suivants : un acide monocarboxylique insaturé ou un ester alkylique en $C_1$-$C_8$ ou un amide de cet acide, un acide sulfonique insaturé ou un sel de métal alcalin de celui-ci, un nitrile insaturé, un ester vinylique d'un acide monocarboxylique en $C_1$-$C_8$ et un styrène.

6. Un procédé selon la revendication 5 dans lequel le copolymère est un copolymère d'anhydride maléique avec l'acétate de vinyle, l'acrylate d'éthyle, l'acétate de vinyle et l'acrylate d'éthyle, ou bien avec l'acide allylsulfonique ou un sel de métal alcalin de cet acide ou encore avec l'acrylonitrile, ou il s'agit de deux ou plus de ces copolymères.

7. Un procédé selon la revendication 1 dans lequel le copolymère est un polymère ternaire d'anhydride maléique et de deux monomères éthyléniques choisis parmi les acides acrylique, métacrylique, crotonique, itaconique, aconitique et des esters de ces acides, l'acrylonitrile, l'acrylamide, l'acétate de vinyle, le styrène et l'alpha-méthylstyrène, la méthylvinyl-cétone, l'acroléine, l'éthylène et le propylène, le rapport molaire entre ces deux monomères éthyléniques étant compris entre 1:3 et 3:1.

8. Un procédé selon la revendication 7 dans lequel le polymère ternaire est un polymère d'anhydride maléique avec (a) l'acétate de vinyle et un autre monomère éthylénique pris parmi l'acrylate d'éthyle, l'acrylamide, la méthyl-vinyl-cétone, l'acrylonitrile et l'acide crotonique, dans un rapport molaire de l'acétate de vinyle à l'autre monomère compris entre 1:3 et 3:1 ; ou bien avec (b) le méthacrylate de méthyle et l'acrylate d'éthyle dans le rapport molaire 1:1 ; ou encore avec (c) l'acrylate de méthyle et l'acroléine dans le rapport molaire 1:1.

9. Un procédé selon la revendication 8 dans lequel le copolymère est un polymère ternaire d'anhydride maléique avec l'acétate de vinyle et l'acrylate d'éthyle dans un rapport molaire de l'anhydride maléique à l'ensemble de l'acétate de vinyle et de l'acrylate d'éthyle compris entre 2,5 et 5, le rapport molaire de l'acétate de vinyle à l'acrylate d'éthyle étant compris entre 1:3 et 3:1.

10. Un procédé selon l'une quelconque des revendications précédentes dans lequel le rapport pondéral entre l'anhydride polymaléique hydrolysé et le copolymère hydrolysé est compris entre 25:75 et 75:25.

11. Un procédé selon l'une quelconque des revendications précédentes dans lequel on ajoute de 0,5 à 20 ppm de la composition.

Fig. 1

Fig. 2

EP 0 388 836 B1

Fig. 3

EP 0 388 836 B1

*Fig. 4*

EP 0 388 836 B1

_Fig. 5_

EP 0 388 836 B1

- □ HOMOPOLYMER
- + COPOLYMER II
- ◇ 75 : 25
- △ 50 : 50
- × 25 : 75

DELTA PRESSURE

TIME [ MINUTES ]

*Fig. 6*

EP 0 388 836 B1

Legend:
□ HOMOPOLYMER
+ COPOLYMER III
◇ 75 : 25
△ 50 : 50
× 25 : 75

Axes: DELTA PRESSURE (vertical), TIME [MINUTES] (horizontal)